# EUROPEAN PATENT APPLICATION

(11) **EP 4 495 463 A1**
(43) Date of publication of application: **22.01.2025**
(21) Application number: 23770590.0
(22) Date of filing: 08.03.2023
(51) Int. Cl.: F16K 11/083, F16K 5/02

(54) **VALVE DEVICE**

(30) Priority: 18.03.2022 JP 2022044024
(71) Applicant: NOK Corporation, Minato-ku Tokyo 105-8585 (JP)
(72) Inventor: TADANO, Hikaru, Makinohara-shi, Shizuoka 421-0532 (JP); YANAGI, Tokunori, Makinohara-shi, Shizuoka 421-0532 (JP)
(74) Representative: TBK
(86) International application number: PCT/JP2023/008819
(87) International publication number: WO 2023/176634

(57) **Abstract**

A valve device comprises a valve member, a housing, a first seal, and a second seal. The valve member includes a shaft portion rotatable about a rotation axis and a rotor connected to an end of the shaft portion in a first direction along the rotation axis, and, on an outer circumferential surface of the rotor there is a first flow path having a first opening. The housing includes an accommodating portion for accommodating the valve member, and a second flow path having a second opening communicable with the first opening, the accommodating portion having on its inner circumferential surface the second opening. A first seal is disposed between an outer circumferential surface of the rotor and an inner circumferential surface of the accommodating portion. The rotor includes a first region on which a coolant pressure acts in the first direction within the accommodating portion, and a second region on which the coolant pressure acts in a second direction opposite to the first direction, and a first area of the first region is below a second area of the second region.

## Description

### TECHNICAL FIELD

The present invention relates to a valve device for controlling a liquid.

### BACKGROUND ART

Conventionally, there has been proposed a valve device for switching a flow path of a fluid. For example, Patent Document 1 discloses a switching valve comprising a rotatable shaft, a valve body connected to one end of the shaft, and a main body for accommodating the valve body.

### Related Art Document

### Patent Document

Patent Document 1 Japanese Patent Application, Laid-Open Publication 2013-92176

### SUMMARY OF THE INVENTION

### Problem to be Solved by the Invention

In the above configuration, a sufficiently large spring is required to bias the valve body in a direction along the axis. Therefore, there is a problem that reduction in the size of the valve device is limited. In view of the above circumstances, an object of one aspect of the present invention is to reduce limitation in decreasing the size of the valve device by an element used to bias the valve member.

### Means of Solving the Problems

A valve device according to one aspect of the present invention is a valve device for controlling a coolant used in an automobile, the valve device including: a valve member that includes a shaft portion rotatable about a rotation axis, and a rotor connected to an end of the shaft portion, the end of the shaft portion being an end in a first direction along the rotation axis, and in which on an outer circumferential surface of the rotor there is a first flow path with a first opening; a housing that includes an accommodating portion for accommodating the valve member, and a second flow path having a second opening communicable with the first opening, the accommodating portion having on its inner circumferential surface the second opening; and a first seal disposed between an outer circumferential surface of the rotor and an inner circumferential surface of the accommodating portion. The rotor includes a first region on which a coolant pressure acts in the first direction within the accommodating portion, and a second region on which the coolant pressure acts in a second direction opposite to the first direction, and a first area of the first region is below a second area of the second region.

A valve device according to one aspect of the present invention is a a valve device for controlling a coolant used in an automobile, the valve device including: a valve member that includes a shaft portion rotatable about a rotation axis, and a rotor connected to an end of the shaft portion, the end of the shaft portion being an end in a first direction along the rotation axis, and in which on an outer circumferential surface of the rotor there is a first flow path with a first opening; a housing that includes an accommodating portion for accommodating the valve member, and a second flow path having a second opening communicable with the first opening, the accommodating portion having on its inner circumferential surface the second opening; and a first seal disposed between an outer circumferential surface of the rotor and an inner circumferential surface of the accommodating portion. The rotor includes a first region on which a coolant pressure acts in the first direction within the housing portion, and a second region on which the coolant pressure acts in a second direction opposite to the first direction, and a first area of the first region is above a second area of the second region.

### Effect of the Invention

According to the present invention, it is possible to reduce limitation in decreasing the size of the valve device by an element used to bias the valve member.

### BRIEF DESCRIPTION OF THE DRAWINGS

Fig. 1 is a cross-sectional view illustrating a configuration of a valve device according to a first embodiment.
Fig. 2 is a side view of a first seal.
Fig. 3 is a cross-sectional view illustrating a configuration of a valve device according to Comparative Example 2.
Fig. 4 is a cross-sectional view illustrating a configuration of a valve device according to a second embodiment.
Fig. 5 is a side view of the first seal according to the second embodiment.
Fig. 6 is a cross-sectional view illustrating a configuration of a valve device according to a third embodiment.
Fig. 7 is a cross-sectional view illustrating a configuration of a valve device according to a fourth embodiment.
Fig. 8 is a cross-sectional view illustrating a configuration of a valve device according to a fifth embodiment.
Fig. 9 is a cross-sectional view illustrating a configuration of a valve device according to a modification of the fifth embodiment.
Fig. 10 is a cross-sectional view illustrating a configuration of a valve device according to a sixth embodiment.
Fig. 11 is a cross-sectional view illustrating a configuration of a valve device according to the sixth embodiment.
Fig. 12 is a cross-sectional view illustrating a configuration of a valve device according to a modification.
Fig. 13 is a cross-sectional view illustrating a configuration of a valve device according to a modification.
Fig. 14 is a cross-sectional view illustrating a configuration of a valve device according to a modification.
Fig. 15 is a cross-sectional view illustrating a configuration of a valve device according to a modification.
Fig. 16 is a cross-sectional view illustrating a configuration of a valve device according to a modification.
Fig. 17 is a cross-sectional view illustrating a configuration of a valve device according to a modification.
Fig. 18 is a cross-sectional view illustrating a configuration of a valve device according to a modification.
Fig. 19 is a cross-sectional view illustrating a configuration of a valve device according to a modification.

### MODES FOR CARRYING OUT THE INVENTION

### A: First Embodiment

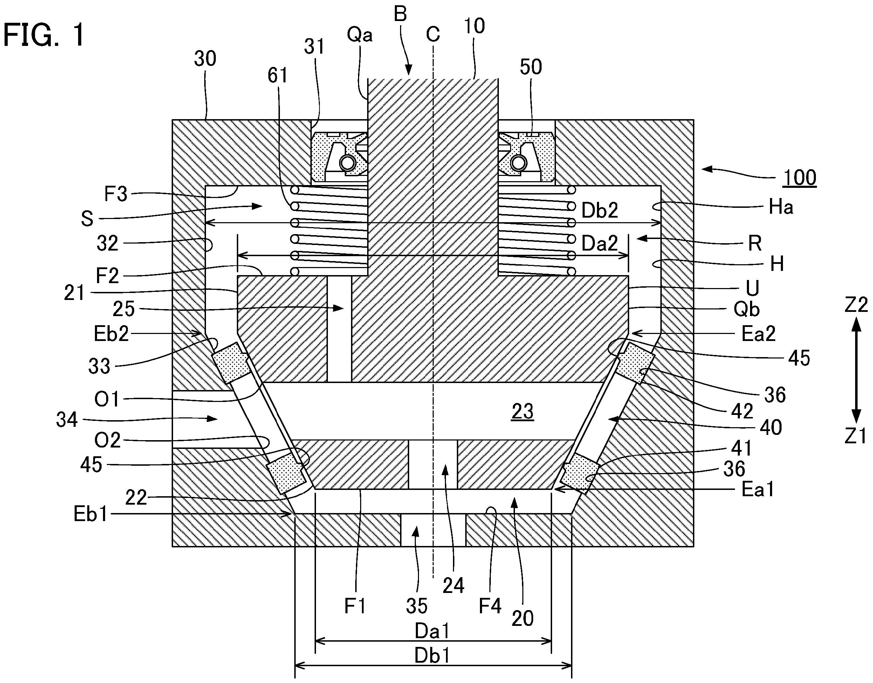

Fig. 1 is a cross-sectional view illustrating a configuration of a valve device 100 according to a first embodiment of the present invention. The valve device 100 is a switching valve for controlling a flow path of a liquid. Specifically, the valve device 100 is a multi-control valve that is mounted to an automobile for controlling, for example, a coolant used in the automobile (e.g., cooling water).

As illustrated in Fig. 1, the valve device 100 includes a valve member B, a housing 30, a first seal 40, a second seal 50, and a spring 61. The valve member B is a rotary valve that switches a flow path of the coolant by rotating about a rotation axis C. The housing 30 is a structure for accommodating and supporting the valve member B. The first seal 40 and the second seal 50 are each an elastic body disposed between the valve member B and the housing 30.

In the following explanation, one direction along the rotation axis C is referred to as a "first direction Z1," and a direction opposite to the first direction Z1 is referred to as a "second direction Z2." For example, the first direction Z1 is a vertically downward direction, and the second direction Z2 is a vertically upward direction. Further, a direction of a circumference of a virtual circle of any diameter around the rotation axis C is referred to as a "circumferential direction" and a direction of a radius of the virtual circle is referred to as a "radial direction."

The valve member B includes a shaft portion 10 and a rotor 20. The shaft portion 10 and the rotor 20 are formed as a single unit from various resins, for example. The shaft portion 10 is a cylindrical portion rotatable about the rotation axis C. The rotation axis C corresponds to a central axis of the shaft portion 10. An end of the shaft portion 10 in the first direction Z1 is coupled to the rotor 20. Another end of the shaft portion 10 in the second direction Z2 is directly or indirectly coupled to a motor (not shown). The shaft portion 10 rotates about the rotation axis C in conjunction with operation of the motor. The shaft portion 10 may be configured separately from and fixed to the rotor 20.

The rotor 20 is a rotatable body that rotates together with the shaft portion 10 about the rotation axis C. An outer surface U of the rotor 20 includes a first surface F1, a second surface F2, and an outer circumferential surface Qb. The first surface F1 and the second surface F2 are each flat circular surfaces that are perpendicular to the rotation axis C. The first surface F1 is a lower surface facing in the first direction Z1, and the second surface F2 is an upper surface facing in the second direction Z2. The shaft portion 10 protrudes from a center of the second surface F2 in the second direction Z2.

The outer circumferential surface Qb of the rotor 20 includes a cylindrical surface 21 and a conical surface 22. The conical surface 22 is located in the first direction Z1 relative to the cylindrical surface 21, and is contiguous with the first surface F1. The cylindrical surface 21 is located in the second direction Z2 relative to the conical surface 22, and is contiguous with the second surface F2. The conical surface 22 is a tapered rotatable surface a diameter of which increases in the second direction Z2. That is, an outer diameter Da1 at an end Ea1 of the conical surface 22 in the first direction Z1 is less than an outer diameter Da2 at an end Ea2 of the conical surface 22 in the second direction Z2 (Da1 < Da2).

The rotor 20 includes a first flow path 23 and a vertical flow path 24. The first flow path 23 extends in a direction perpendicular (e.g., radially) to the rotation axis C. The first flow path 23 has circular first openings O1 on the outer circumferential surface Qb of the rotor 20. Specifically, the first openings O1 are circumferentially spaced apart from each other on the conical surface 22. For convenience of description, in the following explanation reference is made to one of the first openings O1. The vertical flow path 24 extends from the first flow path 23 in the first direction Z1. Specifically, the vertical flow path 24 extends through the rotor 20 from the inner wall surface of the first flow path 23 to the first surface F1. The vertical flow path 24 extends along the rotation axis C.

The rotor 20 also includes a communication path 25. The communication path 25 is a flow path that extends along the rotation axis C. The communication path 25 extends through the rotor 20 from the inner wall surface of the first flow path 23 to the second surface F2. That is, the first flow path 23 inside the rotor 20 and a space outside the rotor 20 are communicable via the communication path 25.

The housing 30 includes an accommodating portion R, which is a space for accommodating the valve member B. The inner surface H of the accommodating portion R in the housing 30 includes a cylindrical surface 31, a third surface F3, an inner circumferential surface Ha, and a fourth surface F4. The cylindrical surface 31 is a rotatable surface spaced apart from and facing the outer circumferential surface Qa of the shaft portion 10. The third surface F3 is a flat annular surface perpendicular to the rotation axis C, and is spaced apart from and faces the second surface F2 of the rotor 20.

A spring 61 is an elastic member for biasing the valve member B (rotor 20) in the first direction Z1. The spring 61 is disposed between the second surface F2 and the third surface F3. Specifically, the spring 61 is a coil spring that surrounds the shaft portion 10.

The inner circumferential surface Ha includes a cylindrical surface 32 and a conical surface 33. The third surface F3 connects the cylindrical surface 31 with the cylindrical surface 32. The cylindrical surface 32 is a rotatable surface and is spaced apart from and faces the outer circumferential surface Q (Qa,Qb) of the valve member B. The cylindrical surface 32 connects the third surface F3 with the conical surface 33.

The conical surface 33 is a tapered rotatable surface that increases in diameter in the second direction Z2. That is, an outer diameter Db1 at an end Eb1 of the conical surface 33 in the first direction Z1 is less than an outer diameter Db2 at an end Eb2 of the conical surface 22 in the second direction Z2 (Db1 < Db2). The conical surface 33 is spaced apart from and faces the conical surface 22 of the rotor 20. That is, relative to the rotation axis C, an angle of the conical surface 22 and an angle of the conical surface 33 are equivalent. The conical surface 33 connects the cylindrical surface 32 with the fourth surface F4. The fourth surface F4 is a flat circular surface perpendicular to the rotation axis C, and is spaced apart from and faces the first surface F1 of the rotor 20. That is, the fourth surface F4 is a bottom surface that faces in the second direction Z2 within the accommodating portion R.

The housing 30 includes a second flow path 34 and a third flow path 35. The second flow path 34 extends in a direction perpendicular to the rotation axis C (i.e., radially). The second flow path 34 has circular second openings O2 on the inner circumferential surface Ha of the accommodating portion R.
Specifically, the second openings O2 are circumferentially spaced apart from each other on the conical surface 33 of the accommodating portion R. In the following description, for convenience of explanation, reference is made to one of the second openings O2. The third flow path 35 extends from the accommodating portion R in the first direction Z1.

When the valve member B is at a predetermined angle of rotation around the rotation axis C (hereinafter, a "communication state"), one of the first openings O1 and one of the second openings O2 overlap each other in the radial direction. Specifically, in the communication state, the first flow path 23 and the second flow path 34 are in linear communication. That is, the first opening O1 and the second opening O2 are communicable with each other.

The first seal 40 is an elastic body disposed between an outer surface U of the rotor 20 and an inner surface H of the accommodating portion R. Specifically, the first seal 40 is disposed between the outer circumferential surface Qb of the rotor 20 and the inner circumferential surface Ha of the accommodating portion R. The first seal 40 elastically supports the rotor 20 while sealing the clearance between the outer circumferential surface Qb and the inner circumferential surface Ha. Various rubber materials, such as chloroprene rubber (CR) or polyurethane rubber (PUR), are examples of materials that can be used for the first seal 40.

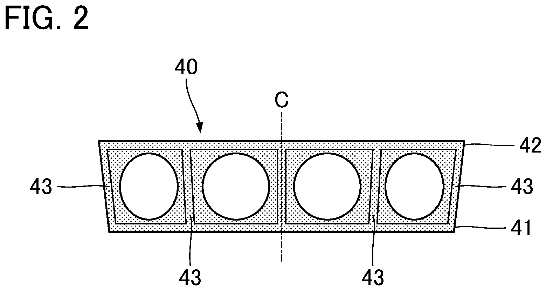

Fig. 2 is a side view of the first seal 40. As illustrated in Fig. 2, the first seal 40 includes a first portion 41, a second portion 42, and a plurality of connecting parts 43. The first portion 41 and the second portion 42 are annular. An outer diameter of the first portion 41 is less than an outer diameter of the second portion 42. The plurality of connecting parts 43 interconnects the first portion 41 and the second portion 42. The connecting parts 43 are spaced apart from each other along the circumferential direction of the first portion 41 and the second portion 42.

As illustrated in Fig. 1, an inner circumferential surface of the first seal 40 has a projection 45. Specifically, a projection 45 extends in the circumferential direction from the inner circumferential surface of each of the first portion 41 and the second portion 42. On the inner circumferential surface of each connecting part 43 a projection 45 extends along the connecting part 43. The inner circumferential surface of the first seal 40 may be coated with a low-friction material such as a PTFE (polytetrafluoroethylene), or the first seal 40 may be formed in its entirety from a low-friction material such as PTFE.

As illustrated in Fig. 1, in the conical surface 33 of the housing 30 there is a circumferentially extending groove 36. The first seal 40 is disposed in the groove 36 of the conical surface 33. That is, an outer circumferential surface of the first seal 40 is in contact with the conical surface 33 of the housing 30. On the other hand, the inner circumferential surface of the first seal 40 is in contact with the conical surface 22 of the rotor 20. Specifically, the projection 45 of the inner circumferential surface of the first seal 40, is in contact with the conical surface 22. As described above, the first seal 40 is disposed between the conical surface 22 of the rotor 20 and the conical surface 33 of the housing 30.

The valve member B is biased in the first direction Z1 by the spring 61, thereby causing the rotor 20 to be pressed against the first seal 40. As a result, sufficient surface pressure (contact pressure) between the first seal 40 and the rotor 20 can be maintained. For example, properties of the spring 61 such as its elastic modulus are set so that the surface pressure between the outer circumferential surface Qb of the rotor 20 and the first seal 40 exceeds a coolant pressure in the accommodating portion R.

The first seal 40 is fixed to the housing 30. The rotor 20 rotates with the outer circumferential surface Qb (conical surface 22) in contact with the inner circumferential surface of the first seal 40. That is, the outer circumferential surface Qb of the rotor 20 slides against the inner circumferential surface of the first seal 40.

As illustrated in Fig. 1, the first portion 41 of the first seal 40 is located further in the first direction Z1 relative to the first opening O1 and the second opening O2. That is, on the rotation axis C the position of the first portion 41 is further in the first direction Z1 relative to the positions of the first opening O1 and the second opening O2. In contrast, the second portion 42 is located further in the second direction Z2 relative to the first opening O1 and the second opening O2. That is, on the rotation axis C, the position of the second portion 42 is further in the second direction Z2 relative to the positions of the first opening O1 and the second opening O2. As will be understood from the above description, in a side view along the radial direction, there is a plurality of first openings O1 and a plurality of second openings O2 between the first portion 41 and the second portion 42 of the first seal 40.

The second seal 50 is disposed between the outer circumferential surface Qa of the shaft portion 10 and the inner circumferential surface Ha of the accommodating portion R (i.e., the cylindrical surface 31), to seal a clearance between the outer circumferential surface Qa and the inner circumferential surface Ha. The second seal 50 is located further in the second direction Z2 relative to the second portion 42 of the first seal 40. That is, on the rotation axis C, the position of the second seal 50 is further in the second direction Z2 relative to the position of the second portion 42. In a side view along the radial direction, the second portion 42 is located between the first portion 41 and the second seal 50.

In the above-described configuration, coolant is supplied from the second flow path 34 to the first flow path 23 via one of the plurality of second openings O2 that is brought into communication with a first opening O1 dependent on a rotational angle of the valve member B, and the coolant is discharged from the first flow path 23 to the outside via the vertical flow path 24 and the third flow path 35. As another example, coolant supplied from the third flow path 35 to the first flow path 23 via the vertical flow path 24 is discharged from the first flow path 23 to the second flow path 34 via one of the plurality of second openings O2 that is brought into communication with a first opening O1 dependent on the rotational angle of the valve member B. As described above, the coolant is controlled dependent on the angle of the valve member B.

As will be understood from Fig. 1, the outer surface U (F1,F2,Qb) of the rotor 20 and the inner surface H of the housing 30 are not in direct contact with each other. Therefore, with the rotor 20 pressed against the first seal 40 by the spring 61, the first surface F1 of the rotor 20 is not in contact with the fourth surface F4 of the accommodating portion R. That is, the force exerted on the rotor 20 by the spring 61 does not directly act on the housing 30 from the rotor 20, and is received by the first seal 40.

In a configuration in which the first surface F1 of the rotor 20 and the fourth surface F4 of the housing 30 are in contact with each other (hereinafter, "Comparative Example 1 "), a clearance between the conical surface 22 of the rotor 20 and the conical surface 33 of the housing 30 (hereinafter, a "sealing clearance") depends on dimensional errors in the valve member B or in the housing 30. For example, if the dimension of the rotor 20 along the rotation axis C is less than a design value, the sealing clearance will exceed the design value. Moreover, if the dimension of the rotor 20 along the rotation axis C exceeds the design value, the sealing clearance will be less than the design value. Accordingly, the surface pressure (contact pressure) acting on the first seal 40 from the conical surface 22 of the rotor 20 and the conical surface 33 of the housing 30 is affected by dimensional errors in the valve member B or in the housing 30. For example, in configurations in which the sealing clearance is at a maximum dimension within a tolerance and an appropriate surface pressure is designed to act on the first seal 40, the surface pressure will be excessive if the sealing clearance is at a minimum dimension within the tolerance. On the other hand, in configurations where the sealing clearance is at a minimum dimension within the tolerance and an appropriate surface pressure is designed to act on the first seal 40, the surface pressure will be insufficient if the sealing clearance is at a maximum dimension.

In contrast to Comparative Example 1, in the first embodiment, with the first surface F1 of the rotor 20 not in contact with the fourth surface F4 of the accommodating portion R, the rotor 20 is pressed against the first seal 40 by the spring 61. That is, the rotor 20 is biased in the first direction Z1 by the spring 61 without the first surface F1 abutting against the fourth surface F4. Accordingly, it is possible to exert an appropriate surface pressure on the first seal 40 regardless of dimensional errors in the valve member B or in the housing 30. Specifically, a surface pressure that acts on the first seal 40 can be determined in accordance with mechanical properties of the spring 61 (e.g., elastic modulus).

In the configuration of Comparative Example 1, where a design has been adopted in which an appropriate surface pressure acts on the first seal 40 with the sealing clearance at a maximum dimension within the tolerance, an excessive surface pressure will act on the first seal 40 if the sealing clearance is at a minimum dimension within the tolerance. That is, the sliding resistance of the rotor 20 will become excessive. As a consequence, excessive torque is required to rotate the rotor 20. In the first embodiment, as described above, an appropriate surface pressure is applied to the first seal 40 regardless of dimensional errors in the sealing clearance. Consequently, an excessive surface pressure is less likely to act on the first seal 40, thereby enabling the sliding resistance of the rotor 20 to be reduced within an appropriate range. Furthermore, an advantage is also obtained in that a torque required to rotate the rotor 20 is reduced.

Further, in the first embodiment, the first seal 40 includes the first portion 41 and the second portion 42 at different positions along the rotation axis C. Therefore, compared with a configuration in which the first seal 40 is constituted of only one of the first portion 41 or the second portion 42, it is possible to stably maintain an attitude of the rotor 20.

The space S shown in Fig. 1 is surrounded by the outer circumferential surface Q (Qa,Qb) of the valve member B, the inner surface H of the accommodating portion R, the second portion 42 of the first seal 40, and the second seal 50. That is, of a space between the outer circumferential surface Q and the inner surface H, the space S comprises a space between the second portion 42 and the second seal 50.
The communication path 25 described above is a flow path that communicates the space S with the first flow path 23. That is, the space S is communicable with the first flow path 23 via the communication path 25.

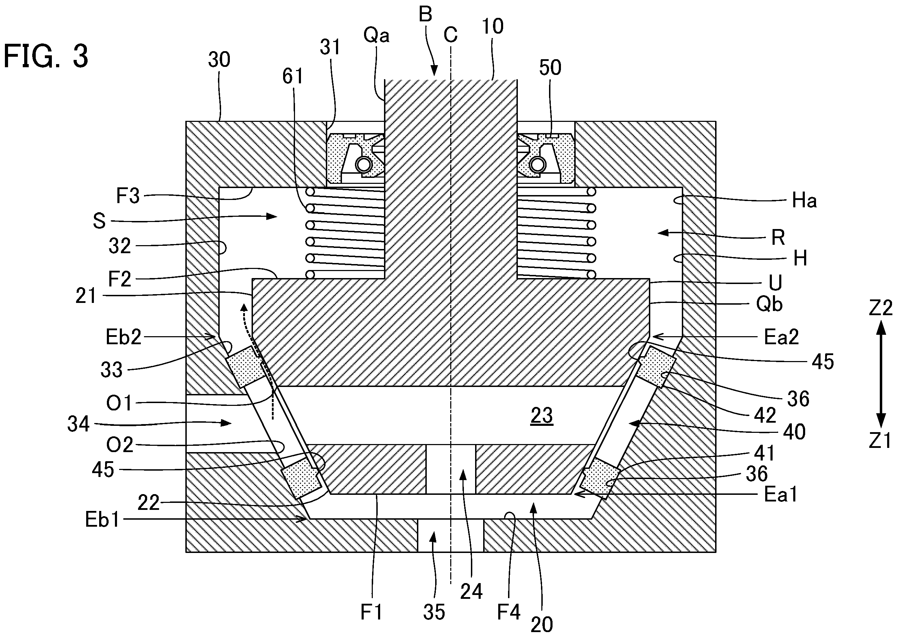

Fig. 3 shows a configuration in which the communication path 25 is not included (hereinafter, "Comparative Example 2"). In Comparative Example 2, the space S is a sealed space. In a design that prioritizes a reduced torque to rotate the rotor 20 over sealing performance, slight leakage of the coolant through the first seal 40 may be acceptable. Furthermore, by use of the switching valve, since coolant that does leak through the first seal 40 is eventually recirculated by flowing into another flow path upon switching of flow paths by the switching valve, slight leakage of the coolant is not particularly problematic. Nonetheless, given these circumstances, as indicated by the dashed arrow in Fig. 3, the coolant flowing through the first flow path 23 and the second flow path 34 may leak from between the second portion 42 of the first seal 40 and the outer circumferential surface Qb of the rotor 20 into the space S. Since the space S is sealed, when the coolant enters the space S pressure in the space S increases. That is, pressure builds up in the space S. As the pressure builds up, excessive force acts on the first seal 40 or the second seal 50, and as a result, problems such as deformation of the seals may occur. Further, the pressure buildup in the space S may cause the rotor 20 to be pressed, and as a result, the first seal 40 may be pressed excessively downward by the rotor 20. As a result, a sliding resistance between the rotor 20 and the first seal 40 may increase.

In contrast to Comparative Example 2, in the first embodiment, the space S and the first flow path 23 are in communication with each other via the communication path 25. Therefore, an increase in pressure caused by leakage of the coolant into the space S does not occur. In other words, according to the first embodiment, it is possible to suppress or prevent pressure buildup in the space S as compared with Comparative Example 2. Therefore, it is possible to reduce or prevent deformation of and an increase in the sliding resistance of the first seal 40 or the second seal 50 caused by pressure buildup in the space S. In the first embodiment in particular, the communication path 25 extends from the second surface F2 of the rotor 20 to the first flow path 23 along the rotation axis C. Thus, for example, as compared with a configuration in which the communication path 25 in the rotor 20 is curved, there is an advantage in that it is easy to create the communication path 25.

In the first embodiment, the surface of the rotor 20 of the valve member B includes a first region on which a coolant pressure acts in the first direction Z1 from the accommodating portion R, and a second region on which a coolant pressure acts in the second direction Z2. A first area S1 of the first region is larger than a second area S2 of the second region (S 1 > S2). The first region includes, for example, the second surface F2. The first region includes, in addition to a plane perpendicular to the rotation axis C (e.g., the second surface F2), an inclined surface on which a coolant pressure component in the first direction Z1 acts. The second region includes, for example, the first surface F1. In addition to a plane perpendicular to the rotation axis C (e.g., the first surface F1), the second region includes an inclined surface on which a coolant pressure component in the second direction Z2 acts.

Assumed is a case in which a uniform pressure acts on the entire surface of the rotor 20. Since the first area S1 is larger than the second area S2, a coolant pressure in the first direction Z1 to the first region exceeds a coolant pressure in the second direction Z2 to the second region. In other words, a force corresponding to a difference between the pressure in the first direction Z1 and the pressure in the second direction Z2 acts to bias the valve member B in the first direction Z1. Therefore, an elastic force of the spring 61 required to adequately bias the valve member B in the first direction Z1 is reduced. Consequently, a size of the spring 61 for biasing the valve member B in the first direction Z1 can be reduced, as compared with a configuration in which the first area S1 and the second area S2 are substantially the same. The spring 61 may be omitted in a case in which a sufficient level of bias in the first direction Z1 on the valve member B can be achieved by the difference in area between the first area S1 and the second area S2. As described above, the spring 61 for biasing the valve member B in the first direction Z1 is not required or the size thereof is reduced, and therefore it is possible to reduce a size of the valve device 100. Thus, according to the first embodiment, reduction in size of the valve device is not limited by an element used to bias the valve member B (e.g., spring 61).

In particular, in the first embodiment, the first seal 40 is in contact with the conical surface 22 of the rotor 20. In the above configuration, the difference between the first area S1 and the second area S2 causes the valve member B to be biased in the first direction Z1, and, as a result, the rotor 20 is pressed against the first seal 40. Therefore, it is easy to secure the surface pressure between the outer circumferential surface Qb of the rotor 20 and the first seal 40. Consequently, according to the first embodiment, the sealing performance of the coolant by the first seal 40 can be maintained at a high level.

### B: Second Embodiment

A second embodiment of the present disclosure will now be described. In the description of the second and subsequent embodiments, elements that have substantially the same function as in the first embodiment will be denoted by like reference numerals, and description thereof will be omitted, as appropriate.

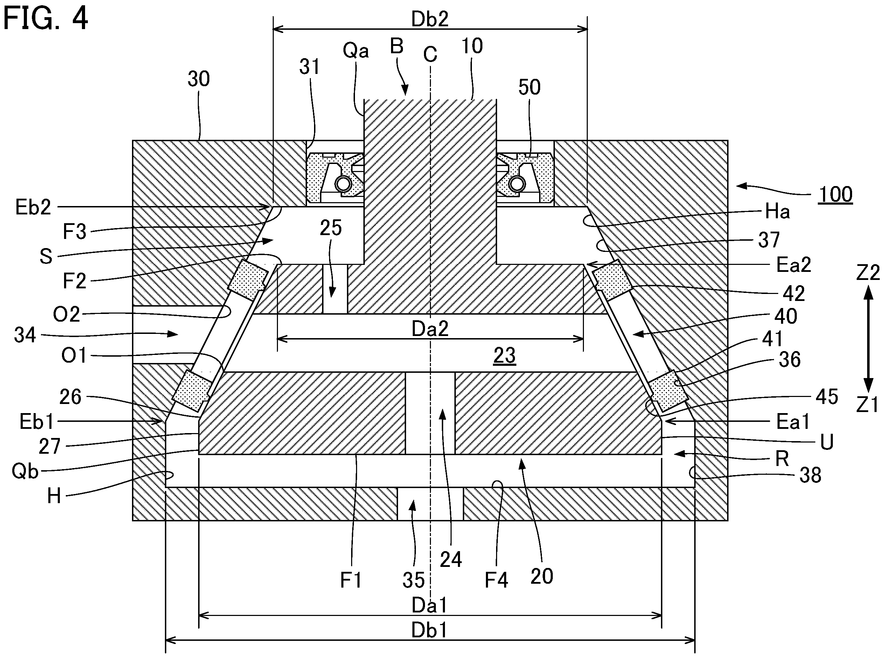

Fig. 4 is a cross-sectional view illustrating the configuration of the valve device 100 in the second embodiment. The valve device 100 according to the second embodiment, as in the first embodiment, is mounted to an automobile as a multi-control valve for controlling the coolant used in an automobile (e.g., cooling water). As illustrated in Fig. 4, as in the first embodiment the valve device 100 includes a valve member B, a housing 30, a first seal 40, and a second seal 50. In the valve device 100 of the second embodiment, the configuration of the rotor 20 in the valve member B is different from that of the first embodiment.

The rotor 20 of the second embodiment is a rotatable body having an outer surface U. The outer surface U includes a first surface F1, a second surface F2, and an outer circumferential surface Qb. As in the first embodiment, the first surface F1 is a lower surface facing in the first direction Z1, and the second surface F2 is an upper surface facing in the second direction Z2. A shaft portion 10 protrudes from the center of the second surface F2 in the second direction Z2.

The outer circumferential surface Qb of the rotor 20 includes a conical surface 26 and a cylindrical surface 27. The conical surface 26 is located in the second direction Z2 relative to the cylindrical surface 27, and is contiguous with the second surface F2. The conical surface 26 is a tapered rotatable surface that increases in diameter in the first direction Z1. That is, the outer diameter Da1 at the end Ea1 of the first direction Z1 of the conical surface 26 is larger than the outer diameter Da2 at the end Ea2 of the second direction Z2 of the conical surface 26 (Da1 > Da2). The cylindrical surface 27 is located in the first direction Z1 relative to the conical surface 26, and is contiguous with the first surface F1.

As in the first embodiment, the rotor 20 of the second embodiment includes a first flow path 23 and a vertical flow path 24. The first flow path 23 has a first opening O1 on the outer circumferential surface Qb of the rotor 20. The vertical flow path 24 extends from the first flow path 23 in the first direction Z1. Specifically, the vertical flow path 24 extends along the rotation axis C through the rotor 20 from the inner wall surface of the first flow path 23 to the first surface F1.

An accommodating portion R of the housing 30 in the second embodiment has an inner surface H. The inner surface H includes a cylindrical surface 31, a third surface F3, an inner circumferential surface Ha, and a fourth surface F4. The cylindrical surface 31 and the third surface F3 are substantially the same as those of the first embodiment. The inner circumferential surface Ha includes a conical surface 37 and a cylindrical surface 38. The third surface F3 connects the cylindrical surface 31 with the conical surface 37.

The conical surface 37 is a tapered rotatable surface that increases in diameter in the first direction Z1. That is, the outer diameter Db1 at the end Eb1 of the conical surface 37 in the first direction Z1 is greater than the outer diameter Db2 at the end Eb2 of the conical surface 37 in the second direction Z2 (Db1 > Db2). The conical surface 37 faces and is spaced apart from the conical surface 26 of the rotor 20. That is, relative to the rotation axis C, an angle of the conical surface 26 and an angle of the conical surface 37 are equivalent. The conical surface 37 connects the third surface F3 with the cylindrical surface 38.

The cylindrical surface 38 is a rotatable surface that faces and is spaced apart from the outer circumferential surface Qb of the rotor 20. The cylindrical surface 38 connects the conical surface 37 with the fourth surface F4. The fourth surface F4 is a flat circular surface that is perpendicular to the rotation axis C, and is spaced apart from and faces the first surface F1 of the rotor 20.

As in the first embodiment, according to the second embodiment the housing 30 includes a second flow path 34 and a third flow path 35. The second flow path 34 has a second opening O2 on the inner circumferential surface Ha of the accommodating portion R. Specifically, the second opening O2 is on the conical surface 37 of the accommodating portion R. When a first opening O1 and a second opening O2 are in communication with each other with the valve member B at a predetermined rotational angle around the rotation axis C, the first opening O1 and the second opening O2 overlap as viewed radially. That is, in the second embodiment, similarly to the first embodiment, the first opening O1 and the second opening O2 are communicable with each other. The third flow path 35 extends from the accommodating portion R in the first direction Z1.

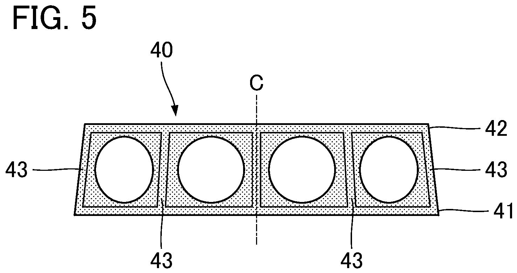

The first seal 40 is an elastic body disposed between the outer circumferential surface Qb of the rotor 20 and the inner circumferential surface Ha of the accommodating portion R. Fig. 5 is a side view of the first seal 40. As illustrated in Fig. 5, the first seal 40 includes a first portion 41, a second portion 42, and a plurality of connecting parts 43, similarly to the first embodiment. As in the first embodiment, on the inner circumferential surface of the first seal 40 there is a projection 45. In the first embodiment the outer diameter of the first portion 41 is less than the outer diameter of the second portion 42, in the second embodiment, the outer diameter of the first portion 41 is more than the outer diameter of the second portion 42.

The first seal 40 is disposed in a groove 36 in the conical surface 37 of the housing 30. That is, the outer circumferential surface of the first seal 40 is in contact with the conical surface 37 of the housing 30. On the other hand, the inner circumferential surface of the first seal 40 is in contact with the conical surface 26 of the rotor 20. More specifically, the projection 45 on the inner circumferential surface of the first seal 40 is in contact with the conical surface 26. As in the first embodiment, the first seal 40 is fixed to the housing 30, and the outer circumferential surface Qb of the rotor 20 slides relative to the inner circumferential surface of the first seal 40.

As in the first embodiment, the second seal 50, is disposed between the outer circumferential surface Qa of the shaft portion 10 and the inner circumferential surface Ha of the accommodating portion R (i.e., the cylindrical surface 31), and the second seal 50 seals the clearance between the outer circumferential surface Qa and the inner circumferential surface Ha. The second seal 50 is in the second direction Z2 relative to the second portion 42 of the first seal 40. That is, the second portion 42 is located between the first portion 41 and the second seal 50 in a side view along the radial direction.

As in the first embodiment, in the second embodiment the rotor 20 includes a communication path 25. The communication path 25 is a flow path extending along the rotation axis C through the rotor 20 from the inner wall surface of the first flow path 23 to the second surface F2. That is, the first flow path 23 and a space S outside the rotor 20 communicate with each other via the communication path 25. Similarly to the first embodiment, of the space between the outer circumferential surface Qb and the inner circumferential surface Ha, the space S comprises a space between the second portion 42 of the first seal 40 and the second seal 50.

As described above, in the second embodiment, since the space S and the first flow path 23 are in communication with each other via the communication path 25, no increase in pressure occurs due to leakage of the coolant into the space S. Consequently, according to the second embodiment, similarly to the first embodiment, it is possible to reduce or prevent the pressure buildup in the space S, as compared with Comparative Example 2 of Fig. 3.

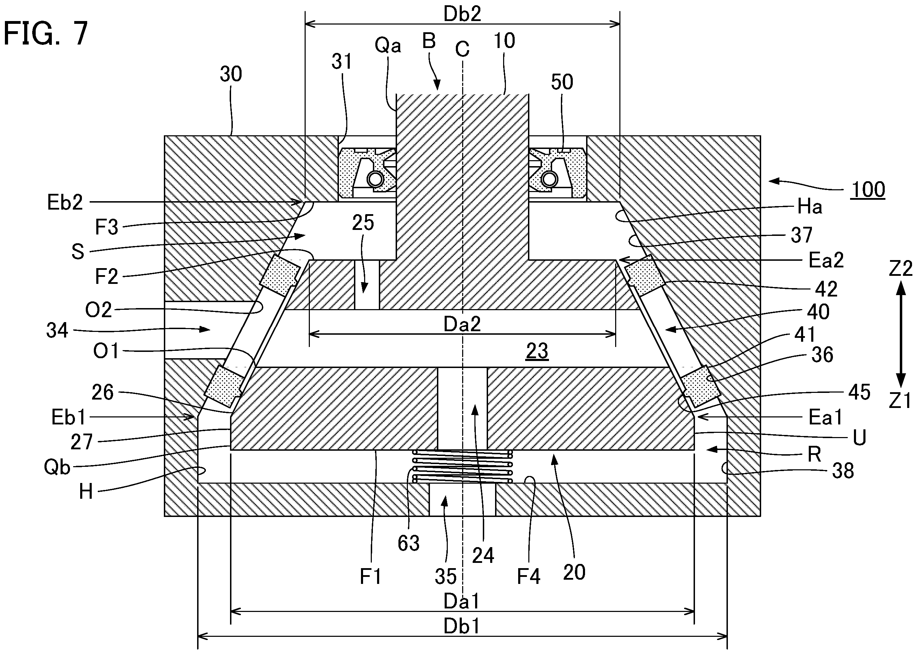

In the second embodiment, the surface of the rotor 20 of the valve member B includes a first region on which a coolant pressure acts in the first direction Z1 from the accommodating portion R, and a second region on which a coolant pressure acts in the second direction Z2. A first area S1 of the first region is smaller than a second area S2 of the second region (S1 < S2). Therefore, assuming that a uniform pressure acts on the entire surface of the rotor 20, the coolant pressure acting in the first direction Z1 on the first region is less than the coolant pressure acting in the second direction Z2 on the second region. In other words, a force corresponding to a difference between the coolant pressure acting in the first direction Z1 and the coolant pressure acting in the second direction Z2 serves to bias the valve member B in the second direction Z2. Therefore, in the second embodiment, it is possible to eliminate an element, such as a spring, for biasing the valve member B in the second direction Z2. Thus, similarly to the first embodiment, in the second embodiment size reduction is not limited dependent on an element used to bias the valve member B. However, if the difference in the force alone is not sufficient to yield a bias in the second direction Z2, a spring for biasing the rotor 20 in the second direction Z2 may be disposed (see Fig. 7).

In particular, in the second embodiment, the first seal 40 is in contact with the conical surface 26 of the rotor 20. In the above configuration, the difference between the first area S1 and the second area S2 causes the valve member B to be biased in the second direction Z2, and, as a result, the rotor 20 is pressed against the first seal 40. Therefore, it is easy to secure the surface pressure between the outer circumferential surface Qb of the rotor 20 and the first seal 40. That is, according to the first embodiment, the sealing performance of the coolant by use of the first seal 40 can be maintained at a high level.

### C: Third Embodiment

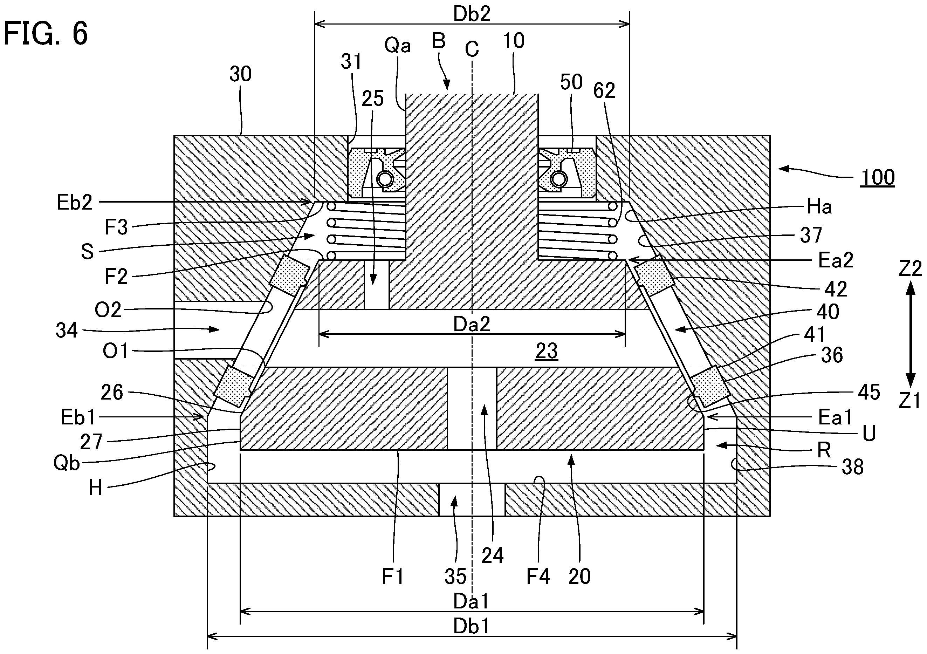

Fig. 6 is a cross-sectional view illustrating a configuration of the valve device 100 according to a third embodiment. The valve device 100 according to the third embodiment is a configuration in which a spring 62 is added to the valve device 100 of the second embodiment. Similarly to the spring 61 of the first embodiment, the spring 62 is an elastic member disposed between the second surface F2 and the third surface F3. The spring 62 is a coiled spring that is disposed to surround the shaft portion 10, and biases the valve member B in the first direction Z1.

In the second embodiment, since the first area S1 is smaller than the second area S2, the valve member B may be excessively biased in the second direction Z2, thus causing the rotor 20 to be excessively pressed against the first seal 40. In the third embodiment, the valve member B is biased in the first direction Z1 by the spring 62. That is, in a state in which the first area S1 is smaller than the second area S2, the spring 62 acts to counter in the first direction Z1 the biasing force acting in the second direction Z2. As a result, it is possible to reduce the likelihood of the rotor 20 being excessively pressed against the first seal 40. Thus, according to the third embodiment, the surface pressure between the first seal 40 and the rotor 20 can be adjusted to be maintained within a moderate range.

### D: Fourth Embodiment

Fig. 7 is a cross-sectional view illustrating a configuration of the valve device 100 in the fourth embodiment. The valve device 100 of the fourth embodiment is a configuration in which a spring 63 is added to the valve device 100 of the second embodiment. The spring 63 is an elastic member for biasing the valve member B (rotor 20) in the second direction Z2. The spring 63 is disposed between the first surface F1 and the fourth surface F4."

In the fourth embodiment, the outer surface U (F1,F2,Qb) of the rotor 20 and the inner surface H of the housing 30 are not in direct contact with each other. Therefore, the rotor 20 is pressed against the first seal 40 by the spring 63 with the second surface F2 not in contact with the third surface F3. That is, the pressing force acting on the rotor 20 from the spring 63 does not directly act on the housing 30 from the rotor 20, and is received by the first seal 40. Accordingly, as in the first embodiment, it is possible to apply an appropriate surface pressure to the first seal 40 regardless of dimensional errors in the valve member B or in the housing 30.

### E: Fifth Embodiment

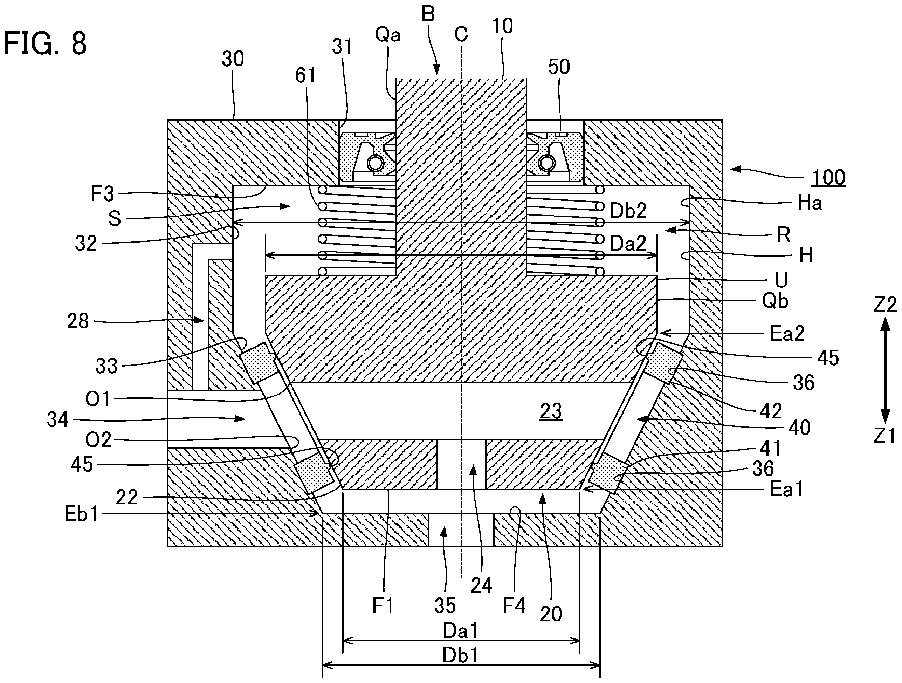

Fig. 8 is a cross-sectional view illustrating a configuration of a valve device 100 according to a fifth embodiment. In the first embodiment, the rotor 20 includes the communication path 25, which communicates the space S with the first flow path 23. In the fifth embodiment, the housing 30 includes a communication path 28 that acts in substantially the same manner as the communication path 25. Other than the communication path 28, the configuration is substantially the same as that of the first embodiment.

As illustrated in Fig. 8, the housing 30 of the fifth embodiment includes the communication path 28, which communicates the space S with the second flow path 34. The communication path 28 is a flow path from the inner surface H of the accommodating portion R (i.e., the cylindrical surface 32) to the inner wall surface of the second flow path 34.

In the fifth embodiment, the space S and the second flow path 34 communicate with each other via the communication path 28. Therefore, no increase in pressure occurs due to leakage of the coolant into the space S. Thus, according to the fifth embodiment, similarly to the first embodiment, it is possible to suppress or prevent pressure buildup in the space S, as compared with Comparative Example 2 of Fig. 3.

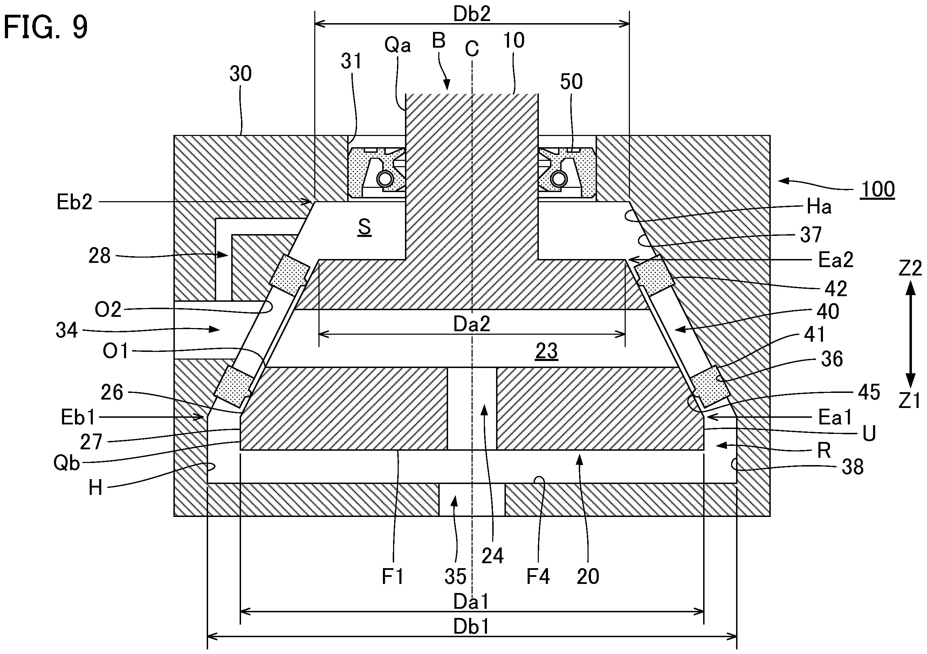

It is of note that the configuration shown in Fig. 8 is based on that of the first embodiment, in which the rotor 20 increases in diameter in the second direction Z2. In addition, also in the second embodiment in which the rotor 20 increases in diameter in the first direction Z1, a configuration substantially the same as the fifth embodiment may be adopted. Specifically, as illustrated in Fig. 9, in the configuration of the second embodiment, the housing 30 may include a communication path 28 that communicates the space S with the second flow path 34. The spring 62 of the third embodiment may be added to the configuration of Fig. 9.

### F: Sixth Embodiment

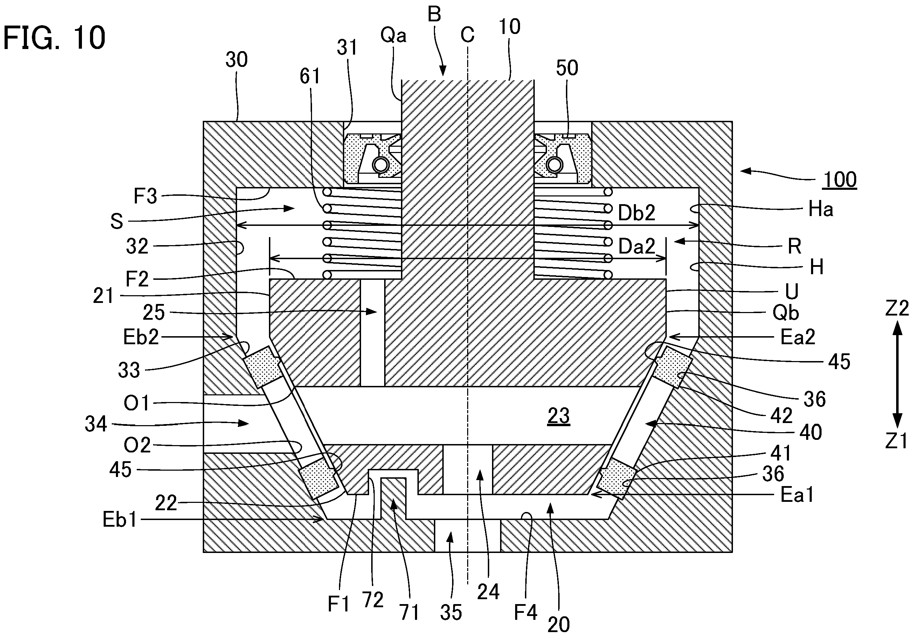

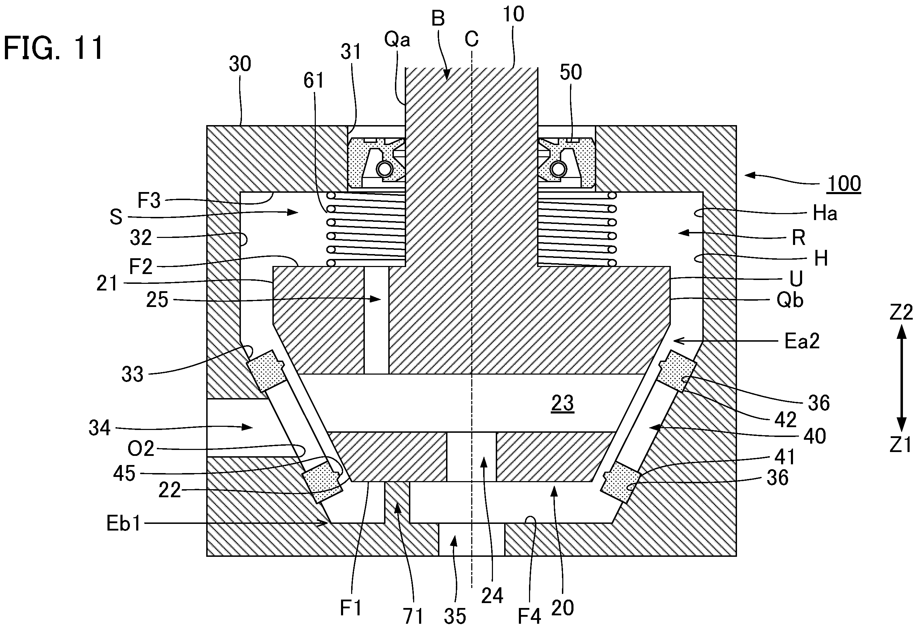

Figs. 10 and 11 are cross-sectional views illustrating a configuration of the valve device 100 according to a sixth embodiment. In the valve device 100 of the sixth embodiment, the rotor 20 (valve member B) is movable in the direction of the rotation axis C (Z1 and Z2). Specifically, the rotor 20 of the sixth embodiment is movable along the rotation axis C between the first position shown in Fig. 10 and the second position shown in Fig. 11. The second position is in the second direction Z2 relative to the first position. In other words, the second position is above the first position. The first position corresponds to the lower end of the range in which the rotor 20 can move, the second position corresponds to the upper end of the range.

As illustrated in Figs. 10 and 11, the housing 30 of the sixth embodiment includes a projection 71 in addition to elements substantially the same as those of the first embodiment. The projection 71 is a portion projecting from the fourth surface F4 in the second direction Z2. The projection 71 is formed integrally with the fourth surface F4. However, the projection 71 may be configured as a separate unit from the housing 30 and fixed to the fourth surface F4. In addition, a recess 72 is included in the first surface F1 (lower surface) of the rotor 20 in the sixth embodiment. The recess 72 has a shape and size that can accommodate the projection 71.

In a state in which the rotor 20 is in a first position (hereinafter, a "first state"), as illustrated in Fig. 10, the projection 71 is located within the recess 72 when viewed in the direction of the rotation axis C. In the first state, the top surface of the projection 71 is not in contact with the bottom surface of the recess 72. Thus, in the first state, as in the first embodiment, the outer surface U of the rotor 20 is not in contact with the inner surface H of the housing 30. The inner surface H of the housing 30 includes a surface of the projection 71 (e.g., a top surface). Therefore, in the first state, the first surface F1 is not in contact with the fourth surface F or with the top surface of the projection 71. Therefore, similarly to the first embodiment, when the first surface F1 is not in contact with the fourth surface F4 of the accommodating portion R, the spring 61 presses the rotor 20 against the first seal 40. That is, the force exerted on the rotor 20 by the spring 61 does not directly act on the housing 30 from the rotor 20, and is received by the first seal 40.

When the rotor 20 is moved from the first state in the second direction Z2, and rotated about the rotation axis C to be at a predetermined angle, the first surface F1 of the rotor 20 comes into contact with the top surface of the projection 71, as illustrated in Fig. 11. The rotor 20 is biased in the first direction Z1 by the spring 61, but contact of first surface F1 with the top surface of the projection 71 prevents the rotor 20 from moving in the first direction Z1. The position of the rotor 20, in which the outer surface U of the rotor 20 (the first surface F1) is in contact with the inner surface H of the housing 30 (the top surface of the projection 71), is the second position, as described above. That is, when the rotor 20 is in the second position (hereinafter, "second state"), the first surface F1 of the rotor 20 is in contact with the top surface of the projection 71.

In the second state, a clearance between the conical surface 22 of the rotor 20 and the conical surface 33 of the housing 30 (sealing clearance) increases compared with the first state. Due to the increase in the sealing clearance, the conical surface 22 is spaced from the first seal 40. Thus, the surface pressure acting on the first seal 40 from the rotor 20 and housing 30 is less than the surface pressure in the first state. Consequently, the sliding resistance of the rotor 20 is reduced as compared with that in the first state. Therefore, in the second state, a torque required to rotate the rotor 20 is reduced compared with the first state. As will be understood from the above description, the second position corresponds to a temporary or transient position for switching the flow path by rotation of the rotor 20. It is of note that in the second state, the conical surface 22 of the rotor 20 may be maintained in contact with the first seal 40.

Substantially the same effect as that of the first embodiment is also attainable in the sixth embodiment. For example, in the first state, when the first surface F1 of the rotor 20 is not in contact with the fourth surface F4 of the accommodating portion R, the rotor 20 is pressed against the first seal 40 by the spring 61. Accordingly, it is possible to exert an appropriate surface pressure against the first seal 40 regardless of dimensional errors in the valve member B or in the housing 30. Furthermore, in the sixth embodiment, when the first surface F1 contacts the top surface of the projection 71, the rotor 20 is held in the second position, thereby reducing a torque required to rotate the rotor 20.

As will be understood from the example of the sixth embodiment, in the present invention, it is not necessary for the first surface F1 and the fourth surface F4 to be in constant contact with each other. Specifically, the first surface F1 and the fourth surface F4 need not be in contact with each other when a surface pressure acting on the first seal 40 from the rotor 20 is maintained within a predetermined range (i.e., when sealed); while in other states the first surface F1 and the fourth surface F4 may be in contact with each other.

### G: Modifications

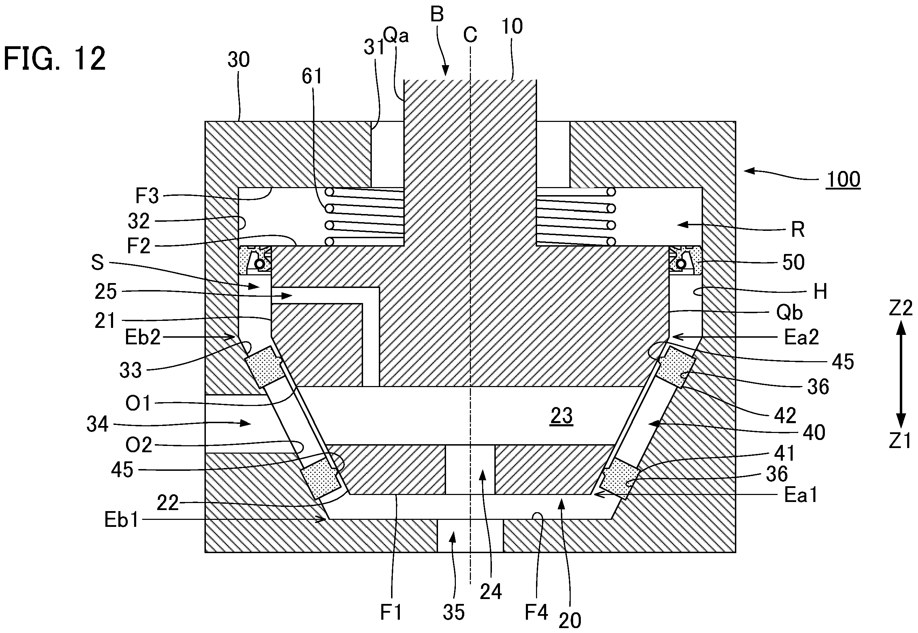

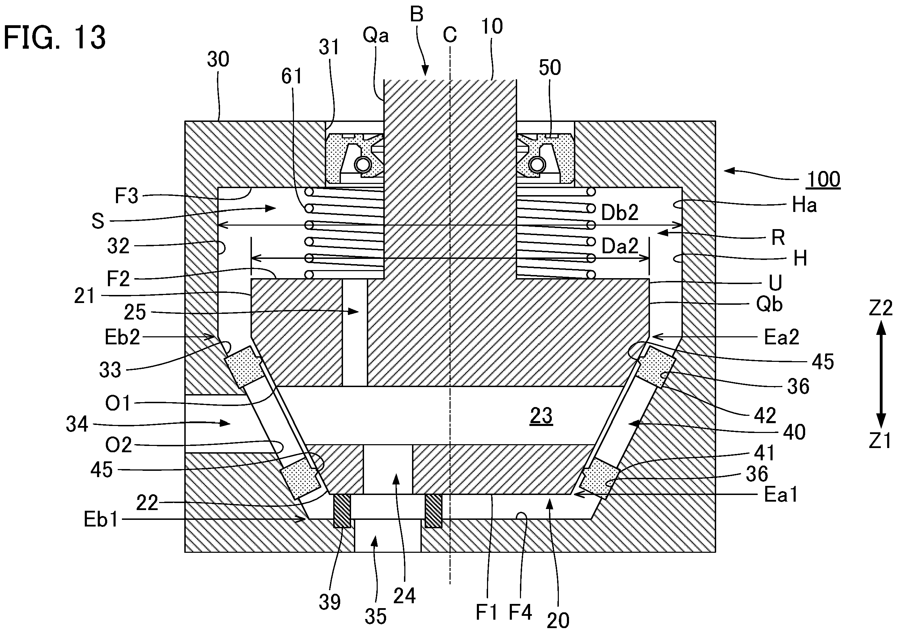

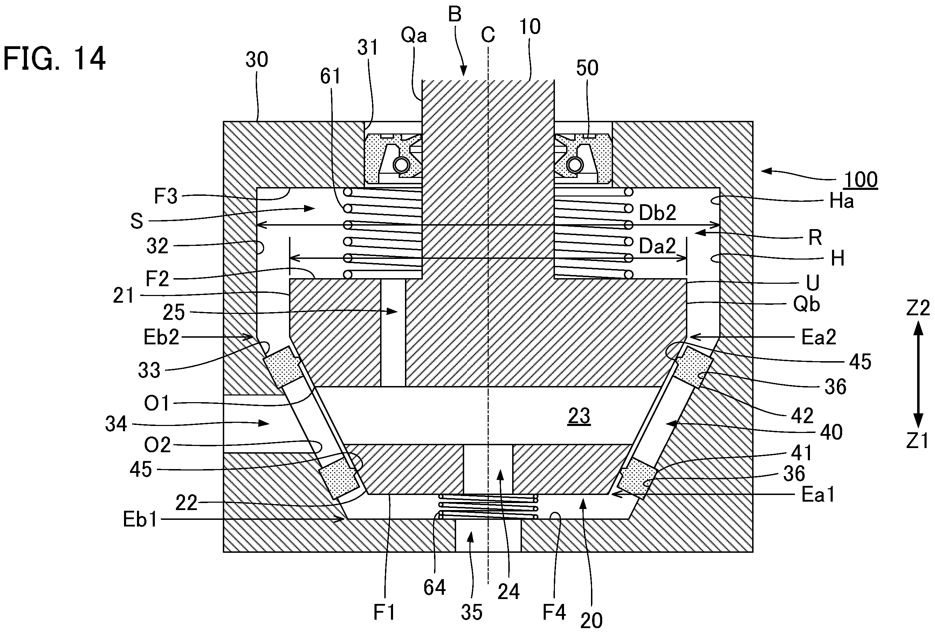

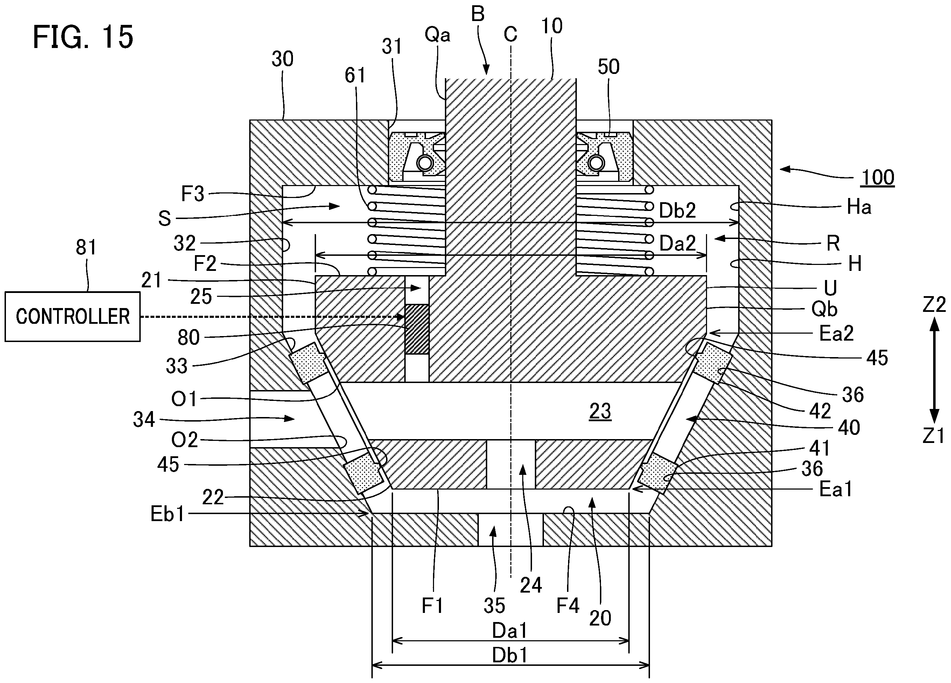

Specific variations of each of the embodiments illustrated above are exemplified below. Two or more aspects freely selected from the following examples may be appropriately combined in so far as no conflict arises.
(1) In the above embodiments, the second seal 50 is disposed between the outer circumferential surface Qa of the shaft portion 10 and the inner surface H of the accommodating portion R (cylindrical surface 31). However, a position at which the second seal 50 is disposed is not limited to the above examples. For example, as illustrated in Fig. 12, the second seal 50 may be disposed between the outer circumferential surface Qb of the rotor 20 and the inner circumferential surface Ha of the accommodating portion R (cylindrical surface 32). A space S in the configuration of Fig. 14 is surrounded by the outer circumferential surface Qb of the rotor 20 (cylindrical surface 27), the inner circumferential surface Ha of the accommodating portion R (cylindrical surface 32), the first seal 40 (second portion 42), and the second seal 50. Therefore, a communication path 25 is provided from the outer circumferential surface Qb of the rotor 20 (cylindrical surface 27) through to the inner wall surface of the first flow path 23. It is of note that, although Fig. 14 illustrates a modification based on the first embodiment, substantially the same configuration may also be employed in the second to the sixth embodiments.
(2) In each of the above-described embodiments, the vertical flow path 24 of the rotor 20 and the third flow path 35 of the housing 30 are in permanent communication with each other. However, a case is also assumed in which the vertical flow path 24 and the third flow path 35 are switched between a communication state and shut-off state depending on a rotation of the valve member B. For example, as illustrated in Fig. 13, the vertical flow path 24 and the third flow path 35 are positioned radially away from the rotation axis C. In the configuration of Fig. 13, on the fourth surface F4 of the housing 30, there is disposed a third seal 39 that surrounds the third flow path 35. The third seal 39 is disposed between the first surface F1 of the rotor 20 and the fourth surface F4 of the housing 30. In the above configuration, in a state in which the vertical flow path 24 is located within the third seal 39, the vertical flow path 24 and the third flow path 35 communicate with each other. On the other hand, in a state in which the vertical flow path 24 is located off the third seal 39, the vertical flow path 24 and the third flow path 35 are shut off. That is, depending on the rotation angle of the valve member B, the vertical flow path 24 and the third flow path 35 are switched between the communication state and the shut-off state.
(3) In the third embodiment (Fig. 6), to counter bias in the second direction Z2 due to the first area S1 being smaller than the second area S2, the valve member B is biased in the first direction Z1 by way of the spring 62. Substantially the same configuration is also employed in the first embodiment. Namely, in the first embodiment, in which the first area S1 is larger than the second area S2, the valve member B is biased in the first direction Z1. Accordingly, as illustrated in Fig. 14, a spring 64 is disposed that biases the valve member B in the second direction Z2. The spring 64 is an elastic member that is disposed between the first surface F1 of the rotor 20 and the fourth surface F4 of the housing 30. According to the configuration of Fig. 14, it is possible to reduce the likelihood of the rotor 20 being excessively pressed against the first seal 40. That is, a surface pressure between the first seal 40 and the rotor 20 can be adjusted to be maintained within a moderate range.
(4) As illustrated in Fig. 15, a pressure adjusting valve 80 may be disposed in the communication path 25. The pressure adjusting valve 80 is a valve mechanism for adjusting a pressure difference between two flow paths that are adjacent to each other, the two flow paths sandwiching the pressure adjusting valve 80. As described above, the communication path 25 communicates the first flow path 23 with the space S. The pressure adjusting valve 80 adjusts a pressure difference between the first flow path 23 and the space S. For example, characteristics of the pressure adjusting valve 80 can be preset to maintain at a target value a pressure difference between the first flow path 23 and the space S.

As described above in the first embodiment, in the configuration of Fig. 15, the surface of the rotor 20 includes the first region, on which coolant pressure in the first direction Z1 acts, and the second region, on which coolant pressure in the second direction Z2 acts, the first area S1 of the first region being larger than the second area S2 of the second region (S1 > S2). Therefore, the coolant pressure acting on the first region in the first direction Z1 exceeds the coolant pressure acting on the second region in the second direction Z2. By adjusting a pressure difference between the first flow path 23 and the space S by way of the pressure adjusting valve 80, a relationship between the coolant pressure acting on the first region and the coolant pressure acting on the second region can be adjusted. Therefore, a biasing force acting on the valve member B due to the difference in area between the first area S1 and the second area S2 can be adjusted by way of the pressure adjusting valve 80.

In the above description, the pressure difference between the first flow path 23 and the space S is maintained at the target value by way of the pressure adjusting valve 80. Instead, a controller 81 as shown in Fig. 15 may dynamically control characteristics of the pressure adjusting valve 80 (e.g., the pressure difference between the first flow path 23 and the space S). For example, the controller 81 dynamically controls the pressure adjusting valve 80 depending on the pressure of the first flow path 23 or space S. According to the above-described configuration, even when the pressure of the first flow path 23 or the space S changes with time, the pressure difference between the first flow path 23 and the space S can be adjusted by the pressure adjusting valve 80 such that a target biasing force acts on the valve member B dependent on the difference between the first area S1 and the second area S2. The pressure of the first flow path 23 or the space S is measured for example by a pressure sensor disposed in the accommodating portion R.

It is of note that Fig. 15 shows an embodiment in which the pressure adjusting valve 80 is added to the configuration of the first embodiment. However, substantially the same configuration is adopted in the second to the sixth embodiments. For example, in the fifth embodiment (Figs. 8 and 9), the pressure adjusting valve 80 is disposed in the communication path 28 formed in the housing 30. The pressure adjusting valve 80 adjusts the pressure difference between the second flow path 34 and the space S.

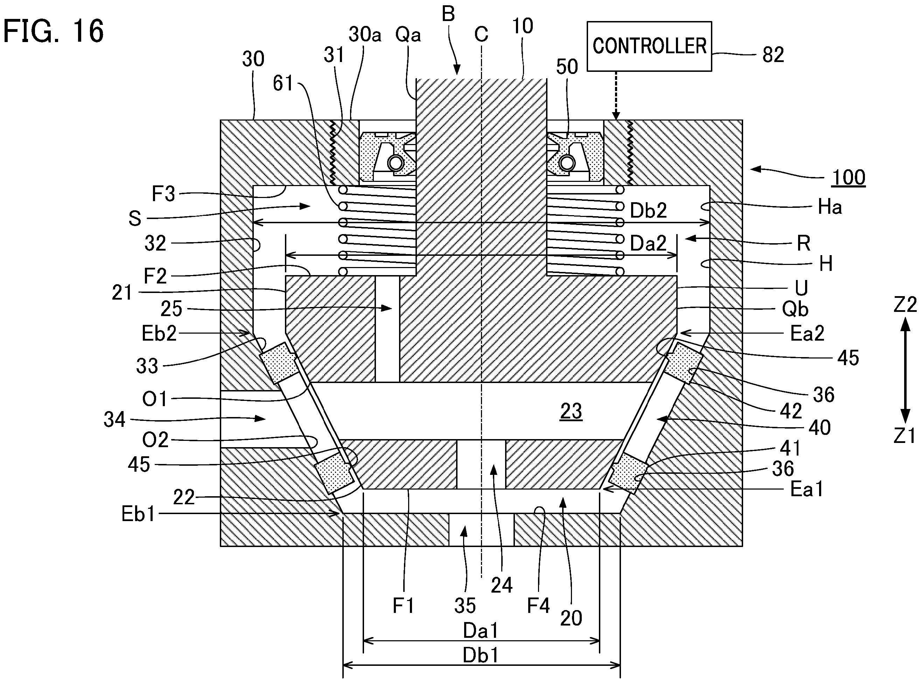

(5) A configuration is assumed that is capable of adjusting a biasing force of the spring 61, which biases the rotor 20. Fig. 16 illustrates a configuration in which a movable portion 30a is disposed in the housing 30. The movable portion 30a is a cylindrical member with a threaded groove on the outer circumferential surface, and is inserted into the cylindrical surface 31 of the housing 30. The second seal 50 is disposed between the inner circumferential surface of the movable portion 30a and the outer circumferential surface Qa of the shaft portion 10.

The cylindrical surface 31 of the housing 30 has a threaded groove that meshes with the threaded groove of the outer circumferential surface of the movable portion 30a. By rotating the movable portion 30a about the rotation axis C, the movable portion 30a is moved toward the rotation axis C. As illustrated in Fig. 16, the spring 61 is disposed between the lower surface of the movable portion 30a and the second surface F2 of the rotor 20. Accordingly, the length of the spring 61 is changed by moving the movable portion 30a along the rotation axis C. That is, by moving the movable portion 30a, the biasing force acting on the rotor 20 from the spring 61 can be adjusted.

The controller 82 shown in Fig. 16 may move the movable portion 30a toward the rotation axis C. For example, the controller 82 moves the movable portion 30a depending on a state of the valve device 100. The state of the valve device 100 is, for example, a surface pressure acting on the first seal 40 from the rotor 20 or the housing 30, a pressure in the accommodating portion R, or a biasing force acting on the rotor 20 from the spring 61. The state of the valve device 100 is measured, for example, by various sensors disposed in the accommodating portion R. With the above-described configuration, even when the state of the valve device 100 changes with time, adjusting the biasing force of the spring 61 by moving the movable portion 30a enables the valve device 100 to be maintained in an appropriate state. For example, in a case in which the surface pressure decreases due to aging of the first seal 40, it is possible to recover the surface pressure against the first seal 40 by moving the movable portion 30a in the first direction Z1.

Although in the above description the movable portion 30a is moved, a configuration for adjusting the biasing force acting on the rotor 20 by the spring 61 may be freely selected, and is not limited thereto. Furthermore, in the above description, the biasing force of the spring 61 is adjustable, and any spring (62,63,64) described as examples in the embodiments is also adjustable by use of substantially the same configuration.

(6) In each of the embodiments, a coil spring is given as an example of the spring 61. However, a type of the spring 61 may be freely selected and is not limited thereto. An elastic member of any form, such as a leaf spring, can be employed as the spring 61. The biasing member for biasing the rotor 20 is not limited to the spring 61. Other types of elastic members, e.g., rubber materials, may be utilized in place of the spring 61 (or together with the spring 61) to bias the rotor 20. Although the above description focuses on the spring 61, the other springs (62,63,64) given as examples in the above-described embodiments are modified in substantially the same manner.

(7) In each of the embodiments, the following configurations are described as examples:
- Configuration A: a configuration in which the space S communicates with the first flow path 23 or the second flow path 34;
- Configuration B: a configuration for biasing the valve member B by a difference between the first area S1 and the second area S2; and
- Configuration C: a configuration in which the rotor 20 is pressed against the first seal 40 by the spring 61 when the outer surface U of the rotor 20 is not in contact with the inner surface H of the housing 30
Configuration A, Configuration B, and Configuration C may be independent of each other.

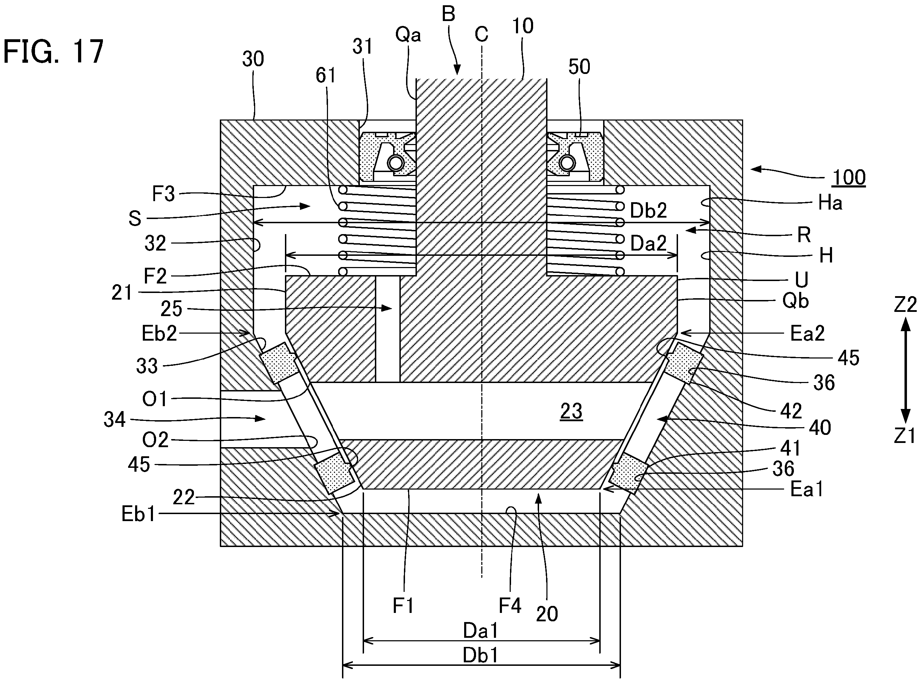

For example, focusing on Configuration A, as illustrated in Fig. 17, a configuration is also assumed where neither the vertical flow path 24 nor the third flow path 35 are provided. In the configuration illustrated in Fig. 17, since the space between the first surface F1 of the rotor 20 and the fourth surface F4 of the housing 30 is not filled with the coolant, coolant pressure does not act on the first surface F1. That is, in Configuration A, coolant pressure acting on the first surface F1 may be eliminated.

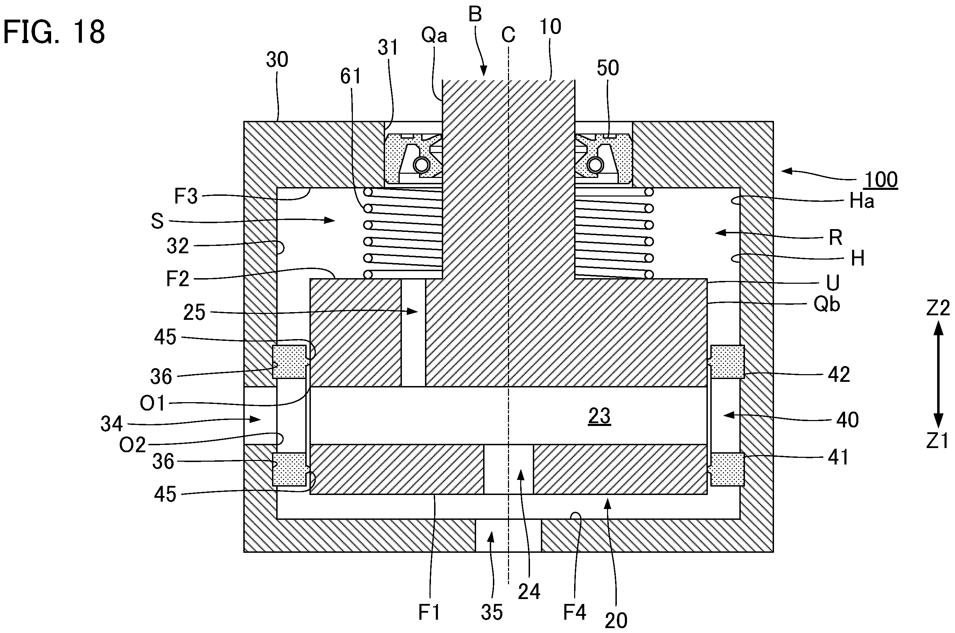

Further, in Configuration A, the first area S1 and the second area S2 need not be larger than one another. Therefore, as illustrated in Fig. 18, a cylindrical rotor 20 in which the outer circumferential surface Qb is a simple cylindrical surface may be employed. In the configuration of Fig. 18, the inner circumferential surface Ha of the housing 30 is also constituted of a cylindrical surface, and the diameter of the first portion 41 and of the second portion 42 of the first seal 40 is the same. Also in the configuration of Fig. 18, since the communication path 25 communicates the space S with the first flow path 23, it is possible to attain the effect of suppressing or preventing a pressure buildup in the space S as compared with Comparative Example 2 in Fig. 3, similarly to the first embodiment.

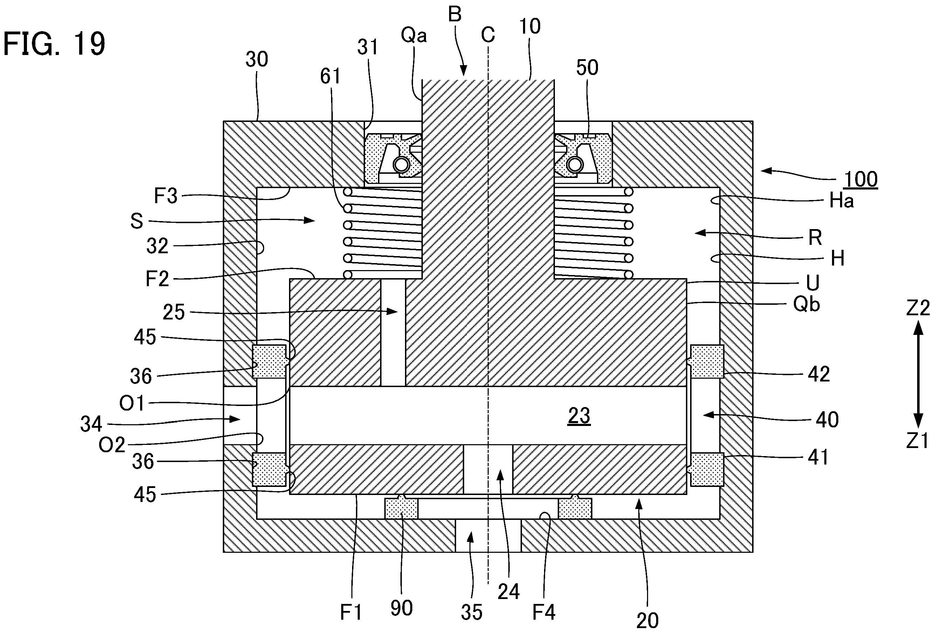

(8) In Configuration C, a configuration that prevents the outer surface U of the rotor 20 and the inner surface H of the housing 30 from contacting each other is not limited to the embodiments as described above. For example, as illustrated in Fig. 19, in a configuration where the outer circumferential surface Qb of the rotor 20 is a simple cylindrical surface, a fourth seal 90 may be disposed between the first surface F1 of the rotor 20 and the fourth surface F4 of the housing 30. Even in the configuration of Fig. 19, the rotor 20 is pressed against the fourth seal 90 by the spring 61 when the first surface F1 is not in touch with the fourth surface F4. That is, the pressing force acting on the rotor 20 by the spring 61 is received by the first seal 40. Accordingly, similarly to the first embodiment, it is possible to apply to the fourth seal 90 an appropriate surface pressure regardless of dimensional errors in the valve member B or in the housing 30.

(9) An expression "n-th" (where n is a natural number) in the present application is used only as a formal and convenient label for distinguishing notated elements, and has no substantial meaning. Accordingly, there is no limitation inferable from the notation "n-th" with respect to the position of each element or order of manufacture.

### Description of Reference Signs

100... valve device, 10...shaft portion, 20...rotor, 21,31,32,38...cylindrical surface, 22,26,37...conical surface, 23...first flow path, 24...vertical flow path, 25,28...communication path, 27... cylindrical surface, 30...housing, 33...conical surface, 34...second flow path, 35...third flow path, 36...groove, 39...third seal, 40...first seal, 41...first portion, 42...second portion, 43... connecting part, 50...second seal, 61,62,63,64...spring, 71...projection, 72...recess, 81,82...controller.

## Claims

1. A valve device for controlling a coolant used in an automobile, the valve device comprising:
a valve member that includes
a shaft portion rotatable about a rotation axis, and
a rotor connected to an end of the shaft portion, wherein the end of the shaft portion is an end in a first direction along the rotation axis, and wherein on an outer circumferential surface of the rotor there is a first flow path with a first opening;
a housing that includes
an accommodating portion for accommodating the valve member, and
a second flow path having a second opening communicable with the first opening, the accommodating portion having on its inner circumferential surface the second opening; and
a first seal disposed between an outer circumferential surface of the rotor and an inner circumferential surface of the accommodating portion,
wherein:
the rotor includes a first region on which a coolant pressure acts in the first direction within the accommodating portion, and a second region on which the coolant pressure acts in a second direction opposite to the first direction, and
a first area of the first region is below a second area of the second region.

2. The valve device according to claim 1, wherein:
the outer circumferential surface of the rotor includes a conical surface, wherein an outer diameter of the conical surface at an end in the first direction is above an outer diameter at another end in the second direction, and
the first seal is in contact with the conical surface.

3. The valve device according to claim 2, further comprising an elastic body that biases the valve member in the first direction.

4. A valve device for controlling a coolant used in an automobile, the valve device comprising:
a valve member that includes
a shaft portion rotatable about a rotation axis, and
a rotor connected to an end of the shaft portion, wherein the end of the shaft portion is an end in a first direction along the rotation axis, and wherein on an outer circumferential surface of the rotor there is a first flow path with a first opening;
a housing that includes
an accommodating portion for accommodating the valve member, and
a second flow path having a second opening communicable with the first opening, the accommodating portion having on its inner circumferential surface the second opening; and
a first seal disposed between an outer circumferential surface of the rotor and an inner circumferential surface of the accommodating portion,
wherein:
the rotor includes a first region on which a coolant pressure acts in the first direction within the housing portion, and a second region on which the coolant pressure acts in a second direction opposite to the first direction, and
a first area of the first region is above a second area of the second region.

5. The valve device according to claim 4, wherein:
the outer circumferential surface of the rotor includes a conical surface, wherein an outer diameter of the conical surface at an end in the first direction is below an outer diameter at another end in the second direction, and
the first seal is in contact with the conical surface.
